(19) **Europäisches Patentamt / European Patent Office / Office européen des brevets**

(11) **EP 2 622 998 A1**

(12) **EUROPEAN PATENT APPLICATION**

(43) Date of publication:
**07.08.2013 Bulletin 2013/32**

(51) Int Cl.:
**A47J 31/36** (2006.01)

(21) Application number: **12425020.0**

(22) Date of filing: **31.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Spinel S.R.L.**
**73052 Parabita (Lecce) (IT)**

(72) Inventor: **Spinelli, Giovanni**
**73052 Parabita (LE) (IT)**

(74) Representative: **Bruni, Giovanni**
**Laforgia, Bruni & Partners**
**Corso Duca degli Abruzzi, 78**
**10129 Torino (IT)**

(54) **System for closing coffee groups provided with hydraulic compensation piston and thermal recovery**

(57) Coffee machine comprising a hydraulic compensative system (15,16, 19) between the upper chamber of the piston and the lower infusion chamber of the coffee group and at least a thermal recovery device (23) for the water needed for the coffee infusion, as well as a new seal system of the infusion chamber of the coffee group able to guarantee a pressure seal even without a seal system with O-ring.

Fig.3

EP 2 622 998 A1

## Description

Object of the present invention is an improvement of the closing mechanism for coffee groups, with which the coffee machines yet patented by the writing company will be provided.

It is known at the state of the art that the capsule (FAP), pod espresso coffee machines and the like now available on the market adopt a substantially standardized functioning scheme which, in a first step, provides that the ground coffee mono-dose has to be introduced inside the coffee group and thereafter the infusion chamber has to be mechanically closed.

In the versions with manual actuation, said group closing mechanisms are mostly actuated by outer levers, which, sometimes, need a relatively high force to guarantee the perfect pressure seal of the infusion chamber.

Sometimes, also the mechanical closing system of the coffee group according to said patents of the writing company, even maintaining all the advantages and the new aspects described, needs a relatively high force to be closed.

In particular, such undesirable phenomenon occurs when there is the need to mount in the coffee group infusion chambers which use pods with diameter greater than the standard ones. In these cases, the closing force has to be necessarily higher, so that the higher pressures developing inside the infusion chamber are compensated.

Currently, in the espresso coffee machines available on the market with manual mechanical closing of the infusion group, the problem is partially solved by lengthening the outer closing lever, but with scarce results in terms of practicality and beauty, since a remarkably longer lever is cumbersome.

Another attempt to reduce the closing force of the coffee group is to provide the mechanical systems with suitable auxiliary hydraulic systems which exploit the force multiplier principle typical of the hydraulic press. In these combined systems, in fact, the contribution of the hydraulic force is summed up to the one of the applied mechanical force, thus guaranteeing a remarkable improvement in closing the group by means of a relatively low force applied to the closing lever of the coffee group.

Anyway, all the just described systems have drawbacks both of hydraulic/mechanical nature and thermal nature, which have not been solved yet.

Aim of the present invention is to improve the compensative systems used in the capsule (FAP), pod coffee machines and the like with mechanical lever closing available on the market, by introducing at least a pressure reducer in form of a "spring-ball" system between the hydraulic piston chamber and the infusion one.

Another aim of the present invention is to solve the thermal problems of said hydraulic compensative systems by using a heat recovery system in order to divide the water needed for the espresso coffee infusion from the water needed for moving the hydraulic piston.

A third aim of the present invention is to exploit the high efficiency of the hydraulic compensation system associated to the thermal recovery system object of the invention, to adopt a new seal system of the infusion chamber of the coffee group on the "upper neck" of the coffee capsule (or FAP) without using an O-ring type seal.

A final aim of the present invention is to implement the just described system in a common capsule (or FAP) espresso coffee machine, in which the sole hydraulic compensation system associated to the thermal recovery system is able to guarantee that the coffee infusion group is perfectly closed without the complementary mechanical closing system and without O-ring. Said aims and consequent advantages, as well as the features of the object according to the present invention will be clearer from the following detailed description referred to some embodiments, shown as a way of not limiting example, with reference to the appended drawings 1/7 to 7/7, in which:

- fig. 1 shows a scheme of the forces acting in a traditional coffee infusion group with compensative hydraulic system known at the state of the art;
- fig. 2 shows a scheme of the forces acting in the coffee infusion group with compensative hydraulic system and pressure reducer according to the present invention;
- fig. 3 shows a summary scheme of the compensative hydraulic system with pressure reducer 24, of the thermal recovery system 23 and seal system of the infusion group without O-ring 25;
- figs. 4a and 4b show the mechanical portion and the soft closing steps of the infusion group in a pod coffee machine provided with lever mechanical closing, and compensative hydraulic system with pressure reducer 24 and thermal recovery 23 according to the present invention;
- fig. 5 shows the hydraulic portion of a pod coffee machine provided with compensative hydraulic system with pressure reducer 24 and thermal recovery system 23;
- fig. 6a shows the step relating to the hydraulic compensation process in a pod coffee machine;
- fig. 6b shows the step relating to the thermal recovery process in a pod coffee machine;
- fig. 6c shows the discharge step of the infusion group according to the invention in a pod coffee machine;
- figs. 7a and 7b show the mechanical portion and the soft closing steps of the infusion group in a capsule (FAP) coffee machine provided with lever mechanical closing, and compensative hydraulic system with pressure reducer 24 and thermal recovery system 23 and of the seal system of the infusion chamber of the coffee group on the "upper neck" of the capsule without O-ring 25 according to the present invention;
- fig. 8 shows the hydraulic portion of a capsule (or FAP) coffee machine provided with compensative hydraulic system with pressure reducer 24, thermal recovery system 23 and the seal system for the infusion chamber of the coffee group on the "upper neck" of the capsule without O-ring 25.

- fig. 9a shows the step relating to the hydraulic compensation process in a capsule (or FAP) coffee machine;
- fig. 9b shows the step relating to the thermal recovery process in a capsule (or FAP) coffee machine with seal of the infusion chamber of the coffee group on the "upper neck" of the capsule without O-ring;
- fig. 9c shows the discharge step of the infusion group according to the invention in a capsule (or FAP) coffee machine;
- figs. 10a, 10b show the longitudinal and cross section of an infusion group of a capsule (or FAP) coffee machine without outer closing lever, wherein the coffee infusion group closing is guaranteed by the sole hydraulic compensation system 24 associated to the thermal recovery system 23 and to the seal system of the infusion chamber of the coffee group on the "upper neck" of the capsule without O-ring 25 according to the present invention;
- fig. 11a shows the hydraulic closing step of the infusion group according to the present invention in a capsule (or FAP) coffee machine without outer closing lever;
- fig. 11b shows the thermal recovery step of the infusion group according to the present invention in a capsule (or FAP) coffee machine without outer closing lever;
- fig. 11c shows the discharge step of the infusion group according to the present invention in a capsule (or FAP) coffee machine without outer closing lever.

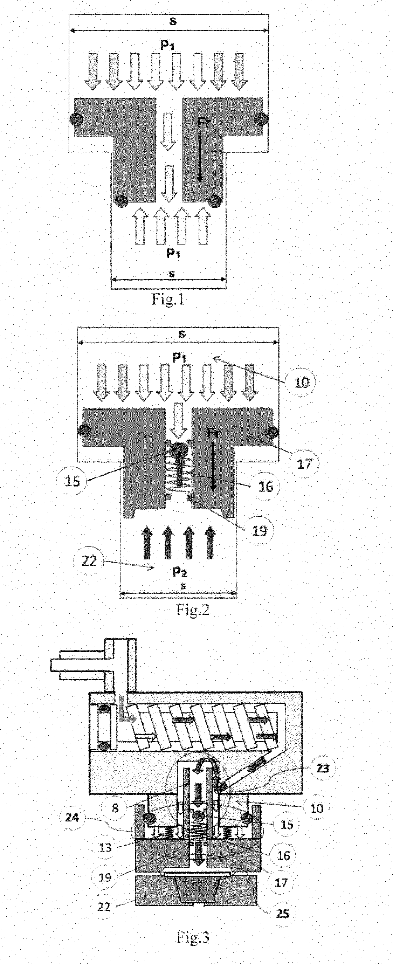

In the systems known at the state of the art, the coffee group is hermetically closed on the ground coffee mono-dose by means of a mechanical type system. As it is shown in fig. 1, the water in the water circuit is pumped inside the upper chamber of the piston and generates a force which pushes the piston downwards. Such force is the product of the fluid pressure P1 for the upper surface S of the piston. The same pressure P1 acts also on the lower surface s, but in the opposed direction, and generates a force which tends to make the coffee group go up again. Since the lower surface s is smaller than the upper one S, a resulting force Fr downwards is obtained, which has intensity proportional to the difference between the two surfaces. The generation of this other push, by summing up to the closing mechanical force of the group, compensates and improves the coffee group locking. Therefore the closing force Fr of the coffee infusion group is linked only to the difference between the two surfaces (upper S and lower s) which are subjected to the same hydraulic pressure P1 according to the following relation:

$$Fr = P1 * (S-s).$$

The disadvantages of the known systems thus realized consist firstly in the fact that their efficiency (in terms of locking force Fr) is as greater as the difference between the two surfaces (upper S and lower s) is greater. As a consequence, the lower surface being equal, in order to increase the locking force Fr avoiding seal losses between the O-ring and the pod, the pistons are to be realized with upper surfaces greater and cumbersome, with consequent material waste.

In addition, in order that the system functions, it is fundamental that the group is hermetically closed by means of a mechanical system.

Finally, said systems, using the same water both for moving the hydraulic piston and for the infusion of the coffee, are subjected to thermal heads which are difficult to be controlled, and therefore the espresso coffee quality is compromised.

Fig. 2 shows, instead, the new hydraulic compensation system made up of a compensation hydraulic piston 17 inside which it is introduced a pressure reducer made up of a "spring 16 - ball 15" system with a preloading register 19 which acts as separator between the hydraulic piston chamber and the infusion one.

Said reducer is normally closed up to pressure values inside the hydraulic circuit about 4-5 bar, while over such values it opens providing a gap downwards for the infusion.

In such a system, the water pumped inside the upper chamber S pushes the compensation piston 17 downwards; just after the same piston rests on the coffee mono-dose, the pressure acting in the upper chamber S begins to increase to about 4-5 bar. Only over said pressure values, the ball 15 opens and admits water in the infusion chamber, and the coffee extraction starts at pressure values variable between 12 and 15 bar.

The new spring 16 - ball 15 system acts substantially as a pressure reducer, since it reduces the pressure in the lower chamber s (infusion chamber) and, therefore, the locking force Fr of the compensation hydraulic piston 17 results proportional not only to the difference between the surfaces S and s, but also to the difference between the pressure P1 of the upper chamber S and P2 of the lower chamber s according to the present relation:

$$Fr = [(P1 \times S) - (P2 \times s)] \qquad (I)$$

The pressure P2 in the lower chamber s always results lower than the upper P1 one of a value equal to the pressure needed to open the spring 16 - ball 15 system (about 4-5 bar), whatever the difference between the two surfaces is.

The immediate practical advantage of this innovation is that it is possible to provide a compensation hydraulic piston 17 which develops a locking force Fr equal to the one obtained in the systems known in the market, but with remarkably smaller diameters and less cumbersome, with a remarkable material saving.

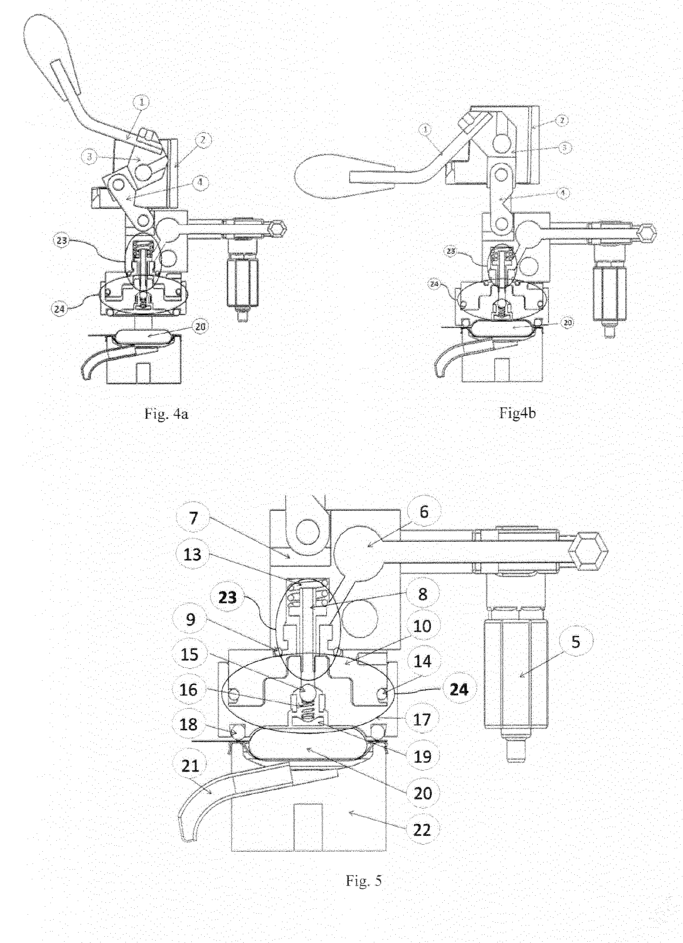

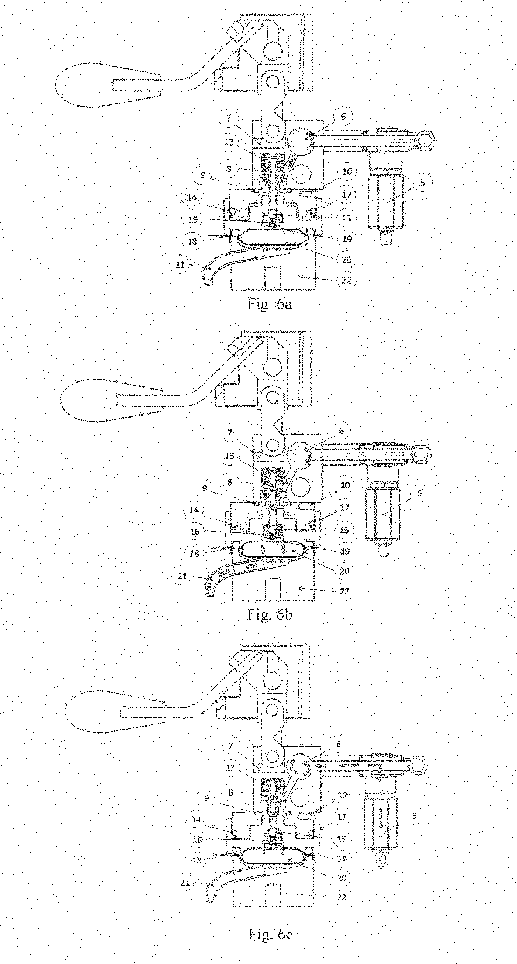

In addition, the force to be exerted on the closing lever 1 of the coffee group is relatively low, and thus the usage is more practical (figs. 4a, 4b, 6a, 6b).

In addition to the hydraulic compensation system 24, fig. 3 shows schematically also the integrated thermal recovery system 23 and the seal system of the infusion chamber of the coffee group without O-ring 25.

The integrated thermal recovery system 23 consists in creating a thermal recovery duct or pipe 8 which acts as separator between the water needed for the espresso coffee infusion and the water needed for moving the compensation hydraulic piston 17. In this way it is guaranteed a constant temperature during the espresso coffee extraction, also in particular cases as for example long inactivity periods of the same machine during which the piston 17 can be colder.

The seal system of the infusion chamber of the coffee group 25 consists of a particular and new inclined profile of the infusion chamber of the coffee group obtained on the lower side of the compensative piston 17, which makes useless the O-ring seal, which however is subjected to wear. The constant pressure action of the piston 17 directly on the upper surface of the capsule (or FAP) guarantees a perfect pressure seal also in presence of inevitable plastic deformations of the capsule (or FAP) caused by the extreme conditions of temperature and pressure during the espresso extraction.

A first absolutely not limiting embodiment of the present invention is the implementation of the just described system in a common pod espresso coffee machine with lever mechanical coffee group closing system.

As it is shown in figs. 4a and 4b, the mechanical portion of the pod coffee machine provided with the just described devices is mainly made up of an outer lever 1, an aluminum support 2 of the mechanics, a crank 3, a brass rod 4.

Fig. 5 shows instead the hydraulic portion of a machine relating to the compensation hydraulic piston made up of: a three way solenoid valve 5, an accelerator 6, a heat exchanger 7, a thermal recovery pipe 8, an O-ring seal 9, a piston support 10, a stainless spring 13, an O-ring seal 14, a ball in stainless steel 15, a spring in stainless steel 16 applied to the ball, a compensation hydraulic piston for pod 17, an O-ring seal for the compensation hydraulic piston for pod 18, a jet 19, a coffee pod 20, a spout 21, a lower pod-support 22. In said figures, the compensative hydraulic system with pressure reducer is indicated as whole with 24 while the thermal recovery system is indicated with 23.

The functioning principle of the described system implemented in a pod espresso coffee machine with lever mechanical coffee group closing system is described in figs. 4a and 4b (mechanical portion) and figs.

6a, 6b, 6c (hydraulic portion). In synthesis it can be divided in four steps:

- soft closing of the infusion group (figs. 4a and 4b);
- hydraulic compensation (fig. 6a);
- heat recovery (fig. 6b);
- system discharge (fig. 6c).

In order to obtain the espresso coffee extraction, the infusion group has to be closed on the ground coffee mono-dose. It is not needed to be hermetically closed, but it is sufficient that the group rests lightly on the coffee pod (fig. 4b). This sliding is obtained by actuating the outer lever 1 which, by means of the rod 4 - crank 3 system inside the aluminum support 2 of the mechanics, pushes mechanically the whole infusion group downwards until it reaches the ground coffee pod 20 (fig. 4b). The soft closing of the infusion group is guaranteed by the spring 13 of the compensation piston 17 which cushions the mechanical closing of the compensation hydraulic piston for pod 17 on the lower pod-support 22. The pressure seal of the inner chamber between the lower pod-support 22 and the compensation hydraulic piston for pod 17, where the coffee pod 20 is arranged, is guaranteed by the O-ring for the compensation hydraulic piston for pod 18 (fig. 5).

In the hydraulic compensation step, the cold water is pumped through the solenoid valve 5 inside the heat exchanger 7, where by rotating around the turns of the accelerator 6, it reaches its optimal temperature. At this point of the cycle, the hot water can flow in two ways, it can go up and reach the upper input of the thermal recovery pipe 8, and it can go down inside the chamber between the piston support 10 and the compensation hydraulic piston for pod 17, Since the pressure is yet at levels lower than 5 bar, the first "way" is closed by the ball 15 arranged at the end of the path before the infusion chamber. Such hindrance generates a pressure accumulator which prevents the water flow upwards, therefore the same is forced to be channeled to the second way down inside the chamber between the piston support 10 and the compensation hydraulic piston for pod 17, thus generating a pressure which pushes downwards the compensation hydraulic piston for pod 17 (fig. 6a).

Once pressure values greater than 5 bar are reached in the system, the heat recovery step begins, in which the ball 15 opens and the pressure accumulator created in the previous step is eliminated. The water begins to go up again, recovering thermal energy inside the exchanger 7 (i.e. increasing its temperature) and then goes down rapidly inside the heat recovery pipe 8 towards the infusion chamber, In this way, it is obtained a sharp separation between the water which serves for moving the compensation hydraulic piston for pod 17 subject to possible temperature heads and the water needed for the espresso coffee infusion, which is always at constant temperature (fig. 6b).

Finally, as it is shown in fig. 6c, once the desired espresso coffee amount is obtained, the electro-pump is stopped and the whole water under pressure provided in the group, both inside the chamber between the piston support 10 and the compensation hydraulic piston for pod 17 and in the infusion chamber, is automatically ejected through the discharge of the three way solenoid valve 5. As a consequence, the system is de-pressurized and the group can be opened for eliminating the exhausted pod and for charging a new pod for a following extraction cycle.

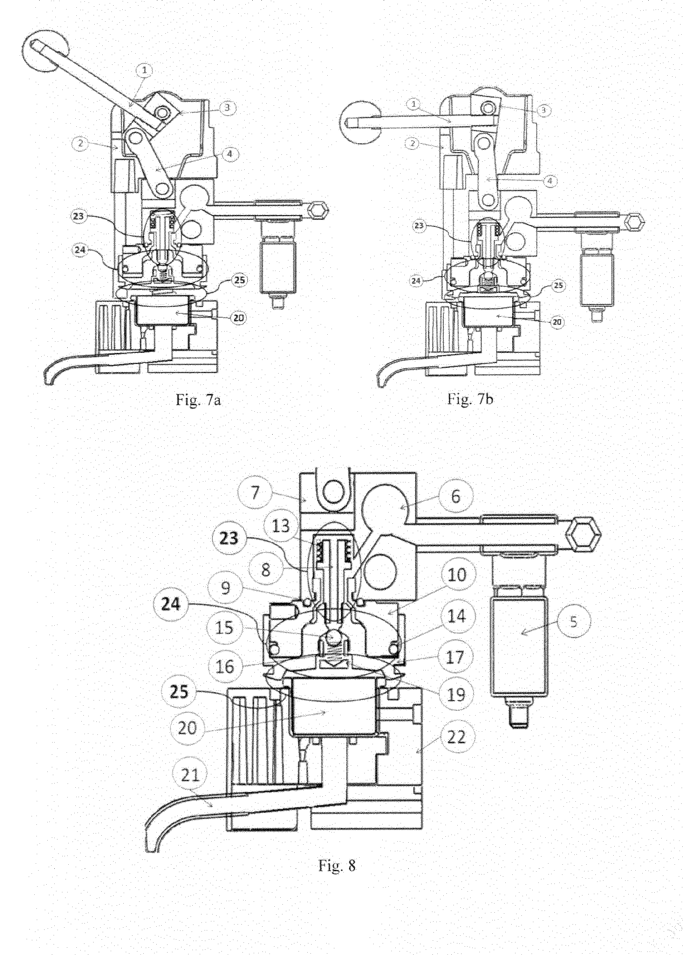

A second absolutely not limiting embodiment of the present invention relates to the implementation of the just described system in a common capsule (or FAP) espresso coffee machine with lever mechanical coffee group closing system. As it is shown in figs. 7a and 7b, the mechanical portion of the capsule (or FAP) coffee machine, provided with the just described devices, is mainly made up of an outer lever 1, an aluminum support 2 of the mechanics, a crank 3, a brass rod 4.

Fig. 8 shows instead the hydraulic portion of the machine relating to the compensation hydraulic piston made up of a three way solenoid valve 5, an accelerator 6, a heat exchanger 7, a thermal recovery pipe 8, an O-ring seal 9, a piston support 10, a stainless spring 13, an O-ring seal 14, a ball in stainless steel 15, a spring in stainless steel 16 applied to the ball, a compensation hydraulic piston for capsule 17, a jet 19, a coffee capsule (or FAP) 20, a spout 21, a lower capsule-support 22. In said figures, the compensative hydraulic system with pressure reducer is indicated as a whole with 24, the thermal recovery system is indicated with 23, while the seal system of the infusion chamber of the coffee group without O-ring is indicated with 25.

In this particular type of capsule (or FAP) espresso coffee machine, the hydraulic compensation system associated to the thermal recovery system is able to guarantee that the infusion group is closed even without a seal system with O-ring of the infusion chamber. This is substantially due to the fact that in these machines, the "upper neck" of the same coffee capsule (or FAP) can be exploited as seal system, on which it is provided the particular profile of the compensation (or FAP) hydraulic piston for capsule (or FAP) 17 with high efficiency. The constant pressure action of the piston 17 directly on the upper surface of the capsule (or FAP) guarantees a perfect pressure seal also in presence of inevitable plastic deformations of the capsules (or FAP) caused by the extreme conditions of temperature and pressure during the espresso extraction.

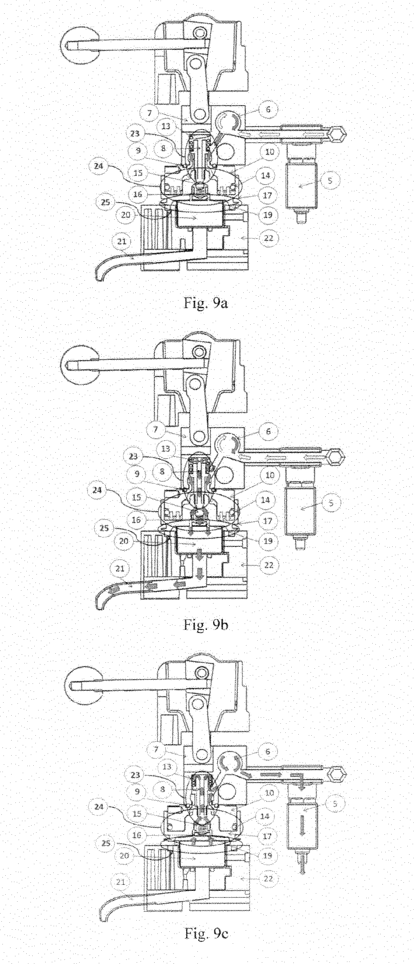

The functioning principle of the described system implemented in a capsule (or FAP) espresso coffee machine with lever mechanical coffee group closing system is described in figs. 7a and 7b (mechanical portion) and figs. 9a, 9b, 9c (hydraulic portion). In synthesis it can be divided in four steps:

- soft closing of the infusion group (figs. 7a and 7b);
- hydraulic compensation (fig. 9a);
- heat recovery (fig. 9b);
- system discharge (fig. 9c).

In order to obtain the espresso coffee extraction, the infusion group has to be closed on the ground coffee mono-dose. It is not needed to be hermetically closed, but it is sufficient that the group rests lightly on the coffee capsule (fig. 7b). This sliding is obtained actuating the outer lever 1 which, by means of the rod 4 - crank 3 system inside the aluminum support 2 of mechanics, pushes mechanically the whole infusion group downwards until it reaches the ground coffee capsule (or FAP) 20 (figs. 7a and 7b). The soft closing of the infusion group is guaranteed by the spring 13 of the piston 17 which cushions the mechanical closing of the compensation hydraulic piston for capsule 17 on the lower capsule-support 22 (fig. 8).

The pressure seal of the inner chamber between the lower capsule-support 22 and the compensation hydraulic piston for capsule 17 where the coffee capsule 20 is arranged, is guaranteed by the particular lower profile of the compensation hydraulic piston for capsule (or FAP) 17.

In the hydraulic compensation step, the cold water is pumped through the solenoid valve 5 inside the heat exchanger 7, where by rotating around the turns of the accelerator 6, it reaches its optimal temperature. At this point of the cycle, the hot water can flow in two ways, it can go up and reach the upper input of the thermal recovery pipe 8, and it can go down inside the chamber between the piston support 10 and the compensation hydraulic piston for capsule 17. Since the pressure is yet at levels lower than 5 bar, the first "way" is closed by the ball 15 arranged at the end of the path before the infusion chamber. Such hindrance generates a pressure accumulator which prevents the water flow upwards, therefore the same is forced to be channeled to the second way down inside the chamber between the piston support 10 and the compensation hydraulic piston for capsule 17, thus generating a pressure which pushes the compensation hydraulic piston for capsule 17 downwards (fig. 9a).

Once pressure values greater than 5 bar are reached in the system, the heat recovery step begins, in which the ball opens and the pressure accumulator created in the previous step is eliminated. The water begins to go up again, recovering thermal energy inside the exchanger 7 (i.e. increasing its temperature) and then goes down rapidly inside the heat recovery pipe 8 towards the infusion chamber. In this way it is obtained a sharp separation between the water which serves for moving the compensation hydraulic piston for capsule 17 subject to possible temperature heads and the water needed for the espresso coffee infusion, which is always at constant temperature (fig. 9b).

Finally, as it is shown in fig. 9c, once the desired espresso coffee amount is obtained, the electro-pump is stopped and the whole water under pressure provided in the group, both inside the chamber between the piston support 10 and the compensation hydraulic piston for capsule 17 and in the infusion chamber, is automatically ejected through the discharge of the three way solenoid valve 5. As a consequence, the system is de-pressurized and the group can be opened for eliminating the exhausted capsule and for charging a new pod for a following extraction cycle.

A third not limiting embodiment of the present invention relates to the implementation of the just described system in a common capsule (or FAP) espresso coffee machine in which only the hydraulic compensation system 24 associated to the thermal recovery system 23 and to the seal system of the infusion chamber of the coffee group without O-ring 25 is able to guarantee that the infusion group is perfectly locked without the mechanical closing complementary system. In fact, in this particular type of capsule (or FAP) coffee machines few millimeters of piston stroke (about 3-4 mm) are sufficient to introduce or extract the ground coffee capsule (or FAO) from the infusion group. As a consequence, the mechanical closing complementary system can be eliminated, and only the compensation hydraulic piston for capsules (or FAP) 17 can be used for opening and closing the group.

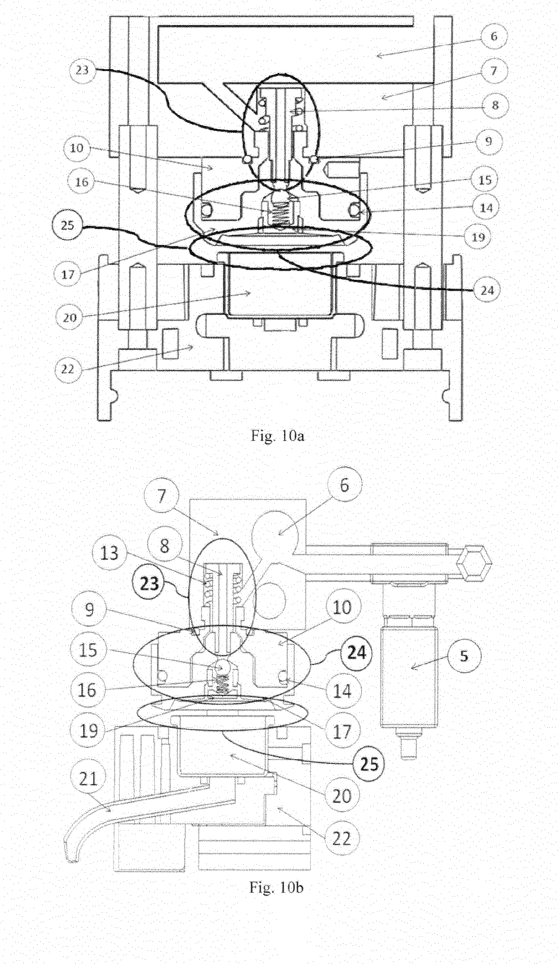

In this case the heat exchanger 7 and the piston support 10 are fixed, the moving portion being only the compensation hydraulic piston for capsules (or FAP) 17 which slides on the piston support 10. As it is shown in figs. 10a, 10b the infusion group with the compensative hydraulic system with pressure reducer 24, the thermal recovery system 23 and the seal system of the infusion chamber of the coffee group without O-ring 25 is provided with a three way solenoid valve 5, an accelerator 6, a thermal recovery pipe 8, a spring 13, an O-ring seal 9, a piston support 10, an O-ring seal 14 for the piston support, a ball 15 in stainless steel, a spring 16 in stainless steel applied to the ball, a compensation hydraulic piston for capsule (or FAP) 17, a jet 19, a coffee capsule FAP 20, a spout 21, and a lower capsule-support 22.

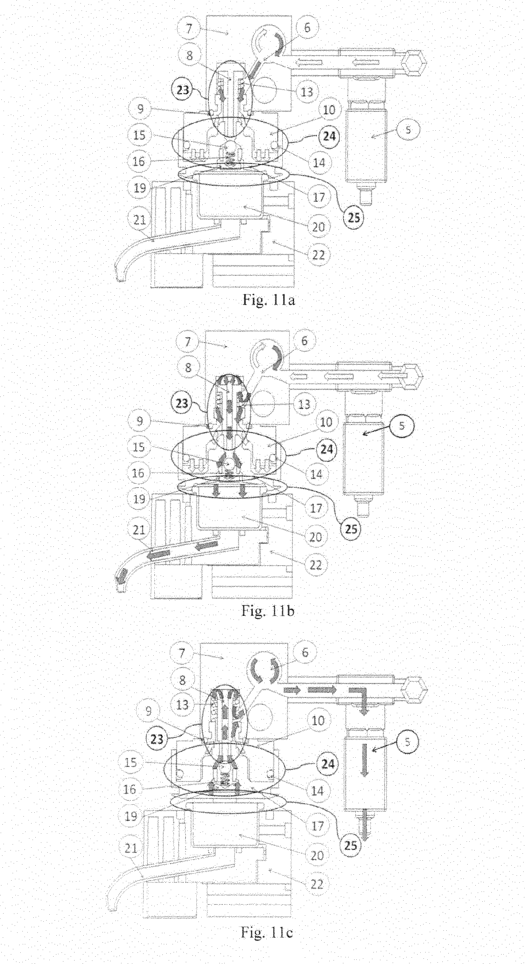

The functioning principle of the described system implemented in a capsule (or FAP) espresso coffee machine is described in figs. 11a, 11b and 11c. In synthesis it can be divided in three steps:

* hydraulic closing and compensation of the infusion group (fig. 11a);
* heat recovery (fig. 11b);
* system discharge (fig. 11c).

The first step relates to the introduction of the capsule inside the infusion group where the compensation hydraulic piston for capsule (or FAP) 17 is lifted about 2 mm from the same capsule 20 thanks to the action of the spring 13 positioned on the thermal recovery pipe 8 inside the heat exchanger 7. In the following the electro-pump is actuated and pumps the cold water through the solenoid valve 5 inside the heat exchanger 7. In this way, by rotating around the turns of the accelerator 6, it reaches its optimal temperature.

At this point, the hot water can flow in two ways, it can go up and reach the infusion chamber through the thermal recovery pipe 8, and it can go down inside the chamber between the piston support 10 and the compensation hydraulic piston for capsule (or FAP) 17. Since the pressure is yet at levels lower than 5 bar, the way leading to the infusion chamber is closed by the ball 15 arranged at the end of the path. The water is thus forced to be channeled to the second way down, i.e. inside the chamber between the upper piston support 10 and the compensation hydraulic piston for capsule (or FAP) 17, thus generating a pressure which pushes downwards the compensation hydraulic piston for capsule 17 (fig. 6a) until it reaches the "upper neck" of the coffee capsule 20. The particular profile of the compensation hydraulic piston for capsule (or FAP) 17 increases the efficiency and the quality of the pressure seal of the infusion chamber (fig. 11b).

Once pressure values greater than 5 bar are reached in the system, the ball 15 opens and the pressure accumulator created is eliminated. The water begins to go up, recovering thermal energy inside the exchanger (i.e. increasing its temperature) and then goes down inside the heat recovery pipe 8 towards the infusion chamber.

Yet, in this way it is obtained a sharp separation between the water which serves for moving the compensation hydraulic piston for capsule (or FAP) 17 subject to possible temperature heads and the water needed for the espresso coffee infusion, which has to be always at constant temperature (fig. 11b). The constant pressure action of the piston 17 directly on the upper surface of the capsule (or FAP) 20 guarantees a perfect pressure seal also in presence of inevitable plastic deformations of the capsule (or FAP) 20 caused by the extreme conditions of temperature and pressure during the espresso extraction.

Finally, as it is shown in fig. 11c. once the desired espresso coffee amount is obtained, the electro-pump is stopped and the whole water under pressure provided in the group, both inside the chamber between the piston support 10 and the compensation hydraulic piston for capsule (or FAP) 17 and in the infusion chamber, is automatically ejected through the discharge of the three way solenoid valve 5. As a consequence, the system is de-pressurized and the compensation hydraulic piston for capsule (or FAP) 17, pushed upwards by the spring 13, returns to the starting position ready for a following extraction cycle.

**Claims**

1. Compensative auxiliary system (24) for closing the coffee infusion group on the basis of the force multiplier principle typical of the hydraulic press applicable to espresso coffee machines comprising a piston (17), pre-loading spring means (13) for actuating the piston, an accelerator (6), a three ways solenoid valve (5), a couple of coffee support-dose devices (17, 22), **characterized by** the provision of at least a settable pressure reducer (15, 16, 19) between the upper chamber of the piston and the lower infusion chamber of the coffee group and of at least a thermal recovery device (23) for the water needed for the coffee infusion.

2. Compensative auxiliary system (24) for closing the coffee infusion group according to claim 1. **characterized in that** said pressure reducer is made up of a coupling between a spring means (16) and a metal ball (15).

3. Compensative auxiliary system (24) for closing the coffee infusion group according to claim 1 and 2, **characterized in that** said pressure reducer (15, 16) remains in closed position until pressure values of about 4-5 bar are reached inside the hydraulic circuit, which can be anyway calibrated.

4. Compensative auxiliary system for closing the coffee infusion group according to claim 1, **characterized in that** said thermal recovery device (23) is made up of a thermal recovery duct (8) which separates the water needed for the espresso coffee infusion from the water needed for moving the compensation hydraulic piston (17).

5. Pod espresso coffee machine comprising a compensation system according to any one of claims 1 to 4.

6. Pod espresso coffee machine according to the preceding claim, **characterized in that** the hydraulic compensation system (24) is coupled to the mechanical closing system of the infusion system made up of an outer lever (1), a support of the mechanics (2), a crank (3), a brass rod (4).

7. Capsule (or FAP) espresso coffee machine comprising a hydraulic compensation system (24) according to any one of claims 1 to 4.

8. Capsule (or FAP) espresso coffee machine according to the preceding claim, **characterized in that** said hydraulic compensation system (24) associated to the thermal recovery system (23) is able to guarantee that the infusion group is perfectly locked even without using a seal system with O-ring (18) of the infusion chamber, since the seal is guaranteed both by the upper neck of the coffee capsule (20) on which the profile of the compensation hydraulic piston for capsule (17) acts and for the inevitable plastic deformations of the capsule (20) caused by the extreme conditions of temperature and pressure during the espresso coffee extraction.

9. Capsule (or FAP) espresso coffee machine according to claims 7 and 8, **characterized in that** the hydraulic compensation system (24) is coupled to the mechanical closing system of the infusion group made up of an outer lever (1), a support of the mechanics (2), a crank (3), a brass rod (4).

10. Capsule espresso coffee machine according to claims 7 and 8, **characterized in that** the hydraulic compensation system (24) associated to the thermal recovery system (23) is able to guarantee that the infusion group is perfectly locked even without the coupling to a mechanical closing system.

Fig.1

Fig.2

Fig.3

Fig. 4a

Fig4b

Fig. 5

Fig. 6a

Fig. 6b

Fig. 6c

Fig. 7a

Fig. 7b

Fig. 8

Fig. 9a

Fig. 9b

Fig. 9c

Fig. 10a

Fig. 10b

Fig. 11a

Fig. 11b

Fig. 11c

**EP 2 622 998 A1**

<table>
<tr><td colspan="5" align="center">**EUROPEAN SEARCH REPORT**</td><td>Application Number<br>EP 12 42 5020</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/235834 A1 (BLANC JEAN-PIERRE [FR] ET AL) 27 October 2005 (2005-10-27) * paragraphs [0183] - [0187]; claims; figures * ----- | 1-10 | INV. A47J31/36 |
| X | US 3 269 298 A (GRUNDMANN JOHN F) 30 August 1966 (1966-08-30) * column 6, line 65 - column 7, line 24; claims; figures * ----- | 1-10 | |
| X | GB 2 451 692 A (TUNBOW ELECTRICAL LTD [HK]) 11 February 2009 (2009-02-11) * page 2, line 26 - page 3, line 15 * * page 6, line 12 - page 7, line 2; claims; figures * ----- | 1-10 | |

TECHNICAL FIELDS SEARCHED (IPC)

A47J

The present search report has been drawn up for all claims

| Place of search | Date of completion of the search | Examiner |
|---|---|---|
| Munich | 13 August 2012 | Acerbis, Giorgio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 622 998 A1

## ANNEX TO THE EUROPEAN SEARCH REPORT
## ON EUROPEAN PATENT APPLICATION NO.

EP 12 42 5020

13-08-2012

| Patent document cited in search report | | Publication date | Patent family member(s) | | Publication date |
|---|---|---|---|---|---|
| US 2005235834 | A1 | 27-10-2005 | AT | 353581 T | 15-03-2007 |
| | | | AU | 2003222942 A1 | 16-09-2003 |
| | | | BR | 0307806 A | 21-12-2004 |
| | | | CA | 2472653 A1 | 12-09-2003 |
| | | | CN | 1638680 A | 13-07-2005 |
| | | | DE | 60311772 T2 | 15-11-2007 |
| | | | EP | 1480540 A1 | 01-12-2004 |
| | | | ES | 2281638 T3 | 01-10-2007 |
| | | | US | 2005235834 A1 | 27-10-2005 |
| | | | WO | 03073897 A1 | 12-09-2003 |
| US 3269298 | A | 30-08-1966 | NONE | | |
| GB 2451692 | A | 11-02-2009 | CN | 101873818 A | 27-10-2010 |
| | | | GB | 2451692 A | 11-02-2009 |
| | | | WO | 2009019549 A1 | 12-02-2009 |

EPO FORM P0459